# EUROPÄISCHE PATENTSCHRIFT

(11) **EP 1 355 106 B1**
(45) Veröffentlichungstag und Bekanntmachung des Hinweises auf die Patenterteilung: **02.06.2010**
(21) Anmeldenummer: 03008403.2
(22) Anmeldetag: 11.04.2003
(51) Int. Cl.: F17C 1/00, F17C 1/14, F17C 1/16, F17C 13/08

(54) **Drucktank**
Pressure vessel
Réservoir sous pression

(30) Priorität: 15.04.2002 DE 10217247
(43) Veröffentlichungstag der Anmeldung: 22.10.2003
(73) Patentinhaber: Deutsches Zentrum für Luft- und Raumfahrt e.V., 51147 Köln (DE)
(72) Erfinder: Schöckle, Siegfried, 74538 Rosengarten (DE)
(74) Vertreter: Hoeger, Stellrecht & Partner Patentanwälte

(56) Entgegenhaltungen:
- WO-A-00/05535
- WO-A-02/18836
- DE-A- 3 026 116
- US-A- 3 472 414
- US-A- 5 577 630

## Beschreibung

Die Erfindung betrifft einen Drucktank zur Aufnahme eines unter Druck stehenden Fluids.

Derartige Drucktanks sind beispielsweise aus der US 5,577,630, US 6,095,367, US 5,704,514 oder US 5,462,193 bekannt.

Aus der US 3,472,414 ist ein Behälter bekannt, welcher eine Hülle aus Flachmaterial mit einer Anordnung von Bögen umfasst. Die Bögen sind miteinander tangential verbunden.

Sie werden in Kraftfahrzeugen beispielsweise als Speicher für gasförmige Kraftstoffe wie Erdgas, Wasserstoff oder Methanol eingesetzt.

Aus der WO 02/18836 A1 ist ein Druckbehälter mit einer Mehrzahl von Zellen und mit einem die Mehrzahl von Zellen umgebenden äußeren Gehäuse bekannt.

Davon ausgehend liegt der Erfindung die Aufgabe zugrunde, einen Drucktank zur Aufnahme eines unter Druck stehenden Fluids zu schaffen, welcher eine hohe Stabilität aufweist und eine hohe Volumeneffektivität aufweist.

Diese Aufgabe wird bei einem Drucktank zur Aufnahme eines unter Druck stehenden Fluids mit einer Mehrzahl von Aufnahmekammern, welche jeweils einen zwischen einstückig ausgebildeten Kammerwänden gebildeten Aufnahmeraum umfassen, wobei zum Außenraum weisende Kammerwände gewölbt ausgebildet sind und wobei gewölbte Kammerwände von Aufnahmekammern, welche gegenüberliegend auf entgegengesetzten Seiten des Drucktanks angeordnet sind, in kräftemäßiger Wirkverbindung stehen, dadurch gelöst, dass eine Kammerwand eines Aufnahmeraums, welche einem benachbarten Aufnahmeraum zugewandt ist, eben ausgebildet ist und eine eingeleitete Zugspannung als durchgehende Kraft bis zur gegenüberliegenden Seite des Drucktanks durchleitet, wobei jede ebene Kammerwand zum Außenraum hin durch eine gewölbte Kammerwand, welche einstückig an den entsprechenden ebenen Kammerwänden sitzt, geschlossen ist und wobei eine Mehrzahl von Aufnahmekammern-Reihen und eine Mehrzahl von Aufnahmekammern-Spalten vorgesehen sind, wobei gegenüberliegende ebene Kammerwände parallel ausgerichtet sind und ebene Kammerwände einer Aufnahmekammer senkrecht aufeinander stoßen.

Durch die Mehrzahl von Aufnahmeräumen lassen sich diese selber mit relativ kleinem Querschnitt ausgestalten, wobei typische Werte bei einer Innenbreite von 40 mm und 60 mm liegen. Dadurch können auch unter hohem Druck stehende Fluide aufgenommen werden. Durch solche relativ kleinen Aufnahmeräume läßt sich weiterhin der Drucktank bei eben entsprechender Ausgestaltung der Aufnahmekammern und insbesondere der Aufnahmekammern außenliegender Aufnahmeräume an vorgegebene Geometrien beispielsweise einer Fahrzeugkarosserie anpassen, ohne daß die Festigkeit des Drucktanks eingeschränkt wird.

Auf die Kammerwände wirken aufgrund des aufgenommenen, unter Druck stehenden Fluids Kräfte, die diese entsprechend belasten. Über gewölbte Kammerwände, die insbesondere knickfrei und kantenfrei mit restlichen Kammerwänden zur Bildung einer solchen Aufnahmekammer verbunden sind, lassen sich dann diese Kräfte über eine große Fläche aufnehmen, und in im wesentlichen reine Zugkräfte umwandeln. Die entsprechenden (unidirektionalen) Zugspannungen lassen sich dann durch verringerten Materialaufwand aufnehmen. Gleichzeitig lassen sich diese Zugkräfte teilweise ableiten.

Dadurch, daß eine kräftemäßige Wirkverbindung zwischen gewölbten Kammerwänden auf gegenüberliegenden Seiten des Drucktanks vorgesehen ist, lassen sich dann solche Kräfte als im wesentlichen reine Zugkräfte auf eben die gegenüberliegende Seite ableiten. Da aber eine gewölbte Kammerwand auf der gegenüberliegenden Seite die gleichen Kräfte erfährt, lassen sich Kräfte in bestimmten, durch den Aufbau des Drucktanks vorgegebenen Richtungen ideal ableiten, so daß insgesamt die Wandbelastung optimiert ist und dabei auch minimiert ist.

Somit lassen sich wiederum auch bei hohen Drücken beispielsweise im Druckbereich zwischen 250 bar und 600 bar Kammerwände relativ dünn ausgestalten, wobei gleichzeitig eine hohe Festigkeit garantiert ist. Dadurch wiederum ergibt sich eine optimierte Volumeneffektivität des erfindungsgemäßen Drucktanks bei minimiertem Gewicht. Es ist dadurch auch möglich, einen solchen Drucktank als Flachtank auszubilden.

Eine Kammerwand eines Aufnahmeraums, welcher einem benachbarten Aufnahmeraum zugewandt ist, ist im wesentlichen eben ausgebildet. Auf eine solche Kammerwand, insbesondere wenn sie gleichzeitig Kammerwand für zwei benachbarte Aufnahmekammern ist, wirkt von der einen Kammerwand eine Druckkraft und von der anderen Kammerwand eine entgegengesetzte Druckkraft. Bei einer ebenen Ausgestaltung läßt sich dann eine solche Aufnahmekammer zum einen auf einfache Weise herstellen und zum anderen läßt sich dadurch die eingeleitete Zugspannung als durchgehende Kraft bis zur gegenüberliegenden Seite des Drucktanks durchleiten.

Eine hohe Festigkeit wird dadurch erreicht, dass jede ebene Kammerwand zum Außenraum hin durch eine gewölbte Kammerwand geschlossen ist, um so eben die lokalen Kraftbelastungen zu minimieren und darüber hinaus auch eine Kraftübertragung auf gegenüberliegende Seiten des Drucktanks zu ermöglichen. Dadurch wiederum läßt sich die erforderliche Gesamtfestigkeit des erfindungsgemäßen Drucktanks gewährleisten, auch bei verringerten Wandstärken.

Es ist eine Mehrzahl von Aufnahmekammern-Reihen und eine Mehrzahl von Aufnahmekammern-Spalten vorgesehen, um eine optimale wirksame Kraftübertragung spaltenweise und reihenweise einschließlich der Längsrichtung erreichen zu können. Die Reihen und Spalten sind dabei insbesondere senkrecht zueinander angeordnet.

Um im wesentlichen reine Zugspannungen zu erreichen, sind dabei insbesondere die Wölbungen gegenüberliegender auf entgegengesetzten Seiten des Drucktanks angeordneter Aufnahmekammern entgegengesetzt, um also Kräfte übertragen zu können, welche relativ zueinander entgegengesetzte Wirkrichtung haben.

Weiterhin ist es vorteilhaft, wenn gegenüberliegende auf entgegengesetzten Seiten des Drucktanks angeordnete Aufnahmekammern im wesentlichen spiegelsymmetrisch zueinander ausgebildet sind. Dadurch lassen sich im wesentlichen reine (unidirektionale) Zugkräfte oder Zugspannungen herstellen. Es genügt dabei, wenn die spiegelsymmetrische Anordnung für einige oder einen Großteil der Aufnahmekammern gilt. Einzelne Aufnahmekammern können unterschiedlich ausgebildet sein. Dadurch wiederum ist es möglich, den Drucktank in seiner Außenkontur an Gegebenheiten einer Fahrzeugkarosserie mit beispielsweise lokalen Ausbuchtungen anpassen zu können.

Insbesondere sind die Aufnahmekammern im Drucktank so angeordnet und so ausgebildet, daß eine auf eine äußere Kammerwand wirkende Kraft, und zwar innere Kraft, aufgrund des aufgenommenen Fluids, durch den Drucktank hindurch auf die entgegengesetzte Seite des Drucktanks ableitbar ist, um so im wesentlichen reine Zugspannungen herzustellen, die optimal ableitbar sind.

Ganz besonders vorteilhaft ist es, wenn aneinanderstoßende Kammerwände mindestens dem Aufnahmeraum zugewandt einen kantenfreien Übergang aufweisen. Vor allem ist es günstig, wenn der Übergang zwischen einer nichtgewölbten und insbesondere ebenen Kammerwand zu einer gewölbten Kammerwand kantenfrei oder knickfrei ist, um so lokale Belastungsspitzen zu vermeiden. Weiterhin ist es auch günstig, wenn aneinanderstoßende ebene Kammerwände mit einem abgerundeten Übergangsbereich versehen sind, um so auch wieder lokale Belastungsspitzen zu vermeiden.

Die Aufnahmeräume erstrecken sich dabei vorteilhafterweise parallel zu einer Längsrichtung. Die wirksamen Kraftübertragungsrichtungen sind unter anderem dann Querrichtungen zu diesen Längsrichtungen. Es kann aber auch eine wirksame Kraftübertragungsrichtung beispielsweise über Zuganker in dieser Längsrichtung vorgesehen sein.

Günstig ist es, wenn eine Wandstärke einer gewölbten Kammerwand im Bereich zwischen P/60 und P/30 liegt, wobei P der Innendruck in bar ist und die Wandstärke in mm gemessen ist. Eine solche Dimensionierung ist insbesondere an den maximal zu erwartenden Innendruck angepaßt, welcher im Bereich zwischen 250 bar und 600 bar liegen kann. Da die erfindungsgemäße Dimensionierungsvorschrift auf den Innendruck (über eine Proportionalität) ausgelegt ist, läßt sich eine optimierte Leichtbauweise realisieren. Da sich ein erfindungsgemäßer Drucktank in Flachbauweise herstellen läßt, ergibt sich eine günstige Volumeneffektivität.

Insbesondere liegt dabei ein Abstand zwischen benachbarten Aufnahmeräumen zwischen 0,4 x S und 5 x S, wobei S die Wandstärke einer gewölbten Kammerwand ist. Dieser Abstand läßt sich noch reduzieren auf den Bereich zwischen 0,4 x S und 2 x S, wenn Zuganker in der Kammerwand angeordnet sind.

Es hat sich ferner als günstig erwiesen, wenn eine Innenbreite eines Aufnahmeraums zwischen im wesentlichen parallelen Kammerwänden, gemessen in mm, zwischen P/6 und P/4 liegt, wobei P der Innendruck in bar ist. Insbesondere kann bei Verkleinerung der Innenbreite eines Aufnahmeraums auch die Wandstärke verringert werden.

Weiterhin ist es günstig, wenn eine gewölbte Kammerwand im Querschnitt im wesentlichen kreisbogenförmig ausgebildet ist. Eine solche Kammerwand kann dann die Form einer Zylinderschale annehmen, beispielsweise einer Zylinder-Halbschale oder einer Zylinder-Dreiviertelschale. Dadurch lassen sich im wesentlichen reine Zugkräfte herstellen.

Vorteilhafterweise liegt die Breite eines Aufnahmeraums im Bereich zwischen 30 mm und 70 mm und insbesondere zwischen 20 mm und 60 mm. Durch solche relativ kleine wabenförmige Aufnahmekammern läßt sich der Drucktank in seiner äußeren Gestalt an die Gegebenheit beispielsweise einer Fahrzeugkarosserie anpassen, so daß auch Einbuchtungen an dem Drucktank ausbildbar sind, ohne daß das strukturelle Konzept des Drucktanks wesentlich verändert werden muß. Im wesentlichen müssen dann nur lokale Modifikationen, beispielsweise durch eine erhöhte Wandstärke im Bereich einer solchen Einbuchtungsstelle durchgeführt werden. Außerdem läßt sich der erfindungsgemäße Drucktank flach gestalten, das heißt mit einer relativ geringen Höhe. Er läßt sich dann in einem Bodenbereich eines Fahrzeugs unterbringen. Auch läßt sich dadurch wiederum eine hohe Volumeneffektivität erreichen.

Günstig ist es, wenn die Aufnahmekammern in einem Verbund und insbesondere einstückig miteinander verbunden sind. Dadurch läßt sich ein Aufnahmekammern-Verbund integral herstellen, ohne daß aufwendige Nachbearbeitungsschritte notwendig sind, um die einzelnen Aufnahmekammern aneinander zu halten.

Bei einer Variante einer Ausführungsform sind gewölbte Kammerwände, welche gegenüberliegend auf entgegengesetzten Seiten des Drucktanks angeordnet sind, durch eine einstückige Wand miteinander verbunden. Durch diese Wand läßt sich eine optimale Kraftübertragung zwischen den gegenüberliegenden gewölbten Kammerwänden erreichen.

Außerhalb der gewölbten Kammerwand und insbesondere zwischen gewölbten Kammerwänden bildet dabei vorzugsweise eine Kammerwand für einen Aufnahmeraum gleichzeitig eine Kammerwand für einen benachbarten Aufnahmeraum, so daß auch die Herstellung vereinfacht ist.

Eine entsprechende Aufnahmekammern-Anordnung läßt sich beispielsweise durch ein Spritzguß- und/oder Druckgußverfahren insbesondere integral herstellen. Auch ein Blasformverfahren kann eingesetzt werden.

Es kann auch vorgesehen sein, daß ein Aufnahmeraum von einer Aufnahmehülle aus einem fluiddichten Material begrenzt ist.

Bei einer weiteren Variante einer Ausführungsform ist ein Aufnahmeraum von einer fluiddichten Aufnahmehülle begrenzt, wobei zwischen den Aufnahmehüllen benachbarter Aufnahmeräume ein Zwischenraum gebildet ist und außenliegende Kammerwände in dem Drucktank durch in den Zwischenräumen angeordnete Kraftübertragungsvorrichtungen in kräftemäßiger Wirkverbindung stehen.

Durch das Vorsehen von Zwischenräumen, in welchen die Kraftübertragungsvorrichtungen angeordnet sind, wird es ermöglicht, daß Bereiche zwischen benachbarten Aufnahmeräumen nicht mehr massiv einstückig ausgebildet werden müssen, sondern beispielsweise ein Kunststoffmaterial und insbesondere Faserverbundwerkstoff umfassen können. Dadurch läßt sich der Drucktank im gesamten leichter ausbilden.

Weiterhin ist es möglich, in dem Zwischenraum besondere Kraftübertragungsvorrichtungen wie Zuganker anzuordnen, die eine erhöhte Kraftübertragungsrate ermöglichen. Dadurch wiederum lassen sich diese Zwischenbereiche dünner ausbilden, das heißt, der Abstand zwischen benachbarten Aufnahmeräumen verringern. Dies trägt wiederum zur Gewichtsverringerung bei. Auch läßt sich die Volumeneffektivität erhöhen, da dann der Wandanteil im Gesamtvolumen verringerbar ist.

Insbesondere ist dabei eine Aufnahmehülle aus einem fluiddichten Material hergestellt. Dadurch läßt sich insgesamt die Ausgestaltung des Drucktanks optimieren: Die Aufnahmehülle wird so hergestellt, daß sie ein Fluid hält und auch noch die erforderliche Eigenfestigkeit aufweist. Über die Kraftübertragungsvorrichtungen läßt sich dann eine optimale Kraftübertragung zwischen den gegenüberliegenden, außenliegenden Aufnahmekammern erzielen, so daß eben die Aufnahmekammer mit kleinerer Wandstärke ausbildbar ist. Bei dem Material für eine Aufnahmehülle kann es sich um einen Leichtmetallwerkstoff wie Aluminium oder Magnesium handeln. Eine Aufnahmehülle und insbesondere ein Verbund aus entsprechenden Aufnahmehüllen läßt sich mittels eines Druckgußverfahrens herstellen.

Günstigerweise umfassen die Kraftübertragungsvorrichtungen Zwischenstege und/oder Zwischenwände, welche zwischen benachbarten Aufnahmehüllen angeordnet sind. Die Zwischenstege lassen sich dabei integral bei der Herstellung eines Aufnahmehüllen-Verbunds mittels eines Gußverfahrens herstellen. Über sie lassen sich Kräfte ableiten. Insbesondere läßt sich dabei eine Kraftübertragung über Zwischenwände in den Zwischenräumen erreichen.

Günstigerweise weist ein Zwischensteg und/oder eine Zwischenwand einen Übergangskanal für das Fluid zwischen benachbarten Aufnahmeräumen auf. Ein solcher Übergangskanal läßt sich mittels eines Gußverfahrens integral herstellen, indem ein Gießkern entsprechend ausgebildet ist. Durch eine solche Fluid-Wirkverbindung läßt sich ein optimierter Drucktank herstellen, bei welchem die einzelnen Aufnahmeräume fluidwirksam miteinander verbunden sind, jedoch trotzdem ein Mehrkammersystem realisiert ist, über das die wirkenden Kräfte optimal auffangbar und ableitbar sind.

Ganz besonders vorteilhaft ist es, wenn die Kraftübertragungsvorrichtungen Zwischenwände umfassen, welche in den Zwischenräumen angeordnet sind. Werden die Zwischenwände aus einem entsprechenden Material gebildet, so läßt sich eine Kraftübertragung zwischen gegenüberliegenden Seiten des Drucktanks erreichen.

Insbesondere wird dabei für die Ausfüllung des Zwischenraums ein solches Material verwendet, durch welches eine Kraftübertragung in jegliche Richtung möglich ist, das heißt, welches isotrope mechanische Eigenschaften aufweist. Es hat sich als günstig erwiesen, wenn hierzu entsprechende Faserverbundwerkstoffe mit einem hohen Kurzfaseranteil eingesetzt werden, die eine hohe Festigkeit von bis zu 250 MPa und darüber hinaus haben, jedoch keine ausgeprägte Vorzugsrichtung. Dadurch muß auch beim Ausspritzen der Zwischenräume nicht auf eine solche Vorzugsrichtung geachtet werden und es lassen sich dann auch Kräfte in senkrecht zueinander liegenden Richtungen mittels des gleichen Ausspritzmaterials übertragen, das heißt auch senkrecht zueinander stehende Zwischenwände lassen sich in dem gleichen Spritzgußverfahren gemeinsam ausfüllen.

Insbesondere läßt sich dabei eine solche Zwischenwand durch ein Druckgußoder Spritzgußverfahren herstellen, indem beispielsweise ein Aufnahmekammern-Verbund oder Aufnahmehüllen-Verbund mit einer entsprechenden Druckguß- oder Spritzgußmaschine positioniert wird und dann die Zwischenräume ausgespritzt werden.

Es kann auch vorgesehen sein, daß eine Zwischenwand aus dem gleichen Material hergestellt ist wie die Aufnahmehüllen.

Insbesondere ist eine Zwischenwand aus einem Kurzfaser-Material wie GRIVORY HTV-SH1 oder GRIVORY GC-4H hergestellt, welches die oben beschriebenen vorteilhaften Eigenschaften aufweist.

Weiterhin ist es günstig, wenn die Kraftübertragungsvorrichtungen Zuganker umfassen, welche gegenüberliegende Seiten des Drucktanks kräftemäßig miteinander verbinden, so daß eine optimale Kraftübertragung zwischen diesen gegenüberliegenden Seiten stattfinden kann. Durch das Vorsehen von Zugankern in den Zwischenräumen lassen sich die Abstände zwischen den Aufnahmeräumen minimieren, das heißt die entsprechenden effektiven Wandstärken minimieren. Dadurch wiederum wird die Volumeneffektivität erhöht.

Insbesondere ist dabei in einem Zwischenraum eine Mehrzahl von beabstandeten Zugankern vorgesehen, um so über eine ganze Längsrichtung und/oder Querrichtung eine effektive Kraftübertragung zu erzielen.

Die Zuganker können dabei in Querrichtungen zur Längsrichtung der Aufnahmeräume orientiert sein und/oder im wesentlichen in Längsrichtung der Aufnahmeräume orientiert sein, um so in jeglicher Richtung eine optimale Kraftübertragung zu erzielen.

Ganz besonders vorteilhaft ist es, wenn ein Zuganker mit gegenüberliegenden Tellerelementen versehen ist. Über solche Tellerelemente ist eine große Fläche bereitgestellt, über die sich Kräfte ableiten oder auch aufnehmen lassen.

Insbesondere ist dabei ein Tellerelement in einem Bereich eines Zwischenraums positioniert, in welchem sich dieser zu einer Außenseite hin erweitert. Dieser Bereich ist zwischen gewölbten Kammerwänden benachbarter Aufnahmekammern gebildet. Dieser Raum kann dann genutzt werden, um die Tellerelemente der Zuganker aufzunehmen, ohne daß im Bereich der übrigen Kammerwände von deren Ebenheit abgewichen werden muß.

Vorteilhaft ist es, wenn die Zuganker Tellerelemente umfassen, welche durch einen oder mehrere Metalldrähte verbunden sind. Durch einen Metalldraht läßt sich eine hohe Eigenstabilität des Zugankers erreichen, um so insbesondere den Einbau in einen Aufnahmehüllen-Verbund zu erleichtern.

Es kann weiterhin vorgesehen sein, daß um den oder die Metalldrähte ein Faserverbundwerkstoff angeordnet ist. Dieser Faserverbundwerkstoff umfaßt insbesondere Langfasern. Dadurch läßt sich eine hohe Festigkeit in der Zugankerrichtung erreichen, um so auch eine optimale Kraftübertragung zu erreichen. Über die Umwicklung mit dem Faserverbundwerkstoff läßt sich das Gewicht des Zugankers reduzieren.

Günstig ist es, wenn die Zuganker ohne Vorspannung in den Zwischenräumen angeordnet sind, um so ein größeres Intervall des Festigkeitsbereiches zu erzielen. Die Anordnung ist dabei aber so, daß die Zuganker während der Herstellung der Zwischenwand, in welcher ein Zuganker eingebettet wird, die Zuganker ausreichend arretiert sind.

Ein erfindungsgemäßer Drucktank läßt sich mit minimierten inneren Verspannungen herstellen, wenn ein Deckelelement zur Begrenzung des Aufnahmeraums in der Längsrichtung integral an Kammerwänden gebildet ist. Bei entsprechender Ausgestaltung von Innenkernen bei einem Gießverfahren läßt sich ein solcher Deckel mitgießen. Eventuelle Öffnungen in einem solchen Deckelelement, welche herstellungsbedingt zum Herausziehen von Gießkernen vorgesehen werden müssen, lassen sich dann dazu nutzen, Anschlüsse und/oder Verbindungen für den Drucktank herzustellen.

Die nachfolgende Beschreibung bevorzugter Ausführungsformen dient im Zusammenhang mit der Zeichnung der näheren Erläuterung der Erfindung. Es zeigen:
- Figur 1: eine seitliche Schnittansicht eines ersten Ausführungsbeispiels eines erfindungsgemäßen Drucktanks;
- Figur 2: eine seitliche Teilschnittansicht eines zweiten Ausführungsbeispiels eines erfindungsgemäßen Drucktanks;
- Figur 3: eine perspektivische Darstellung eines Ausführungsbeispiels eines Zugankers;
- Figur 4: eine schematische perspektivische Darstellung eines weiteren Ausführungsbeispiels eines Drucktanks;
- Figur 5: eine Schnittansicht für eine beispielhafte Formgebung eines Drucktanks;
- Figur 6: eine Schnittansicht einer weiteren beispielhaften Formgebung und
- Figur 7: eine perspektivische Ansicht eines weiteren Ausführungsbeispiels in Explosionsdarstellung.

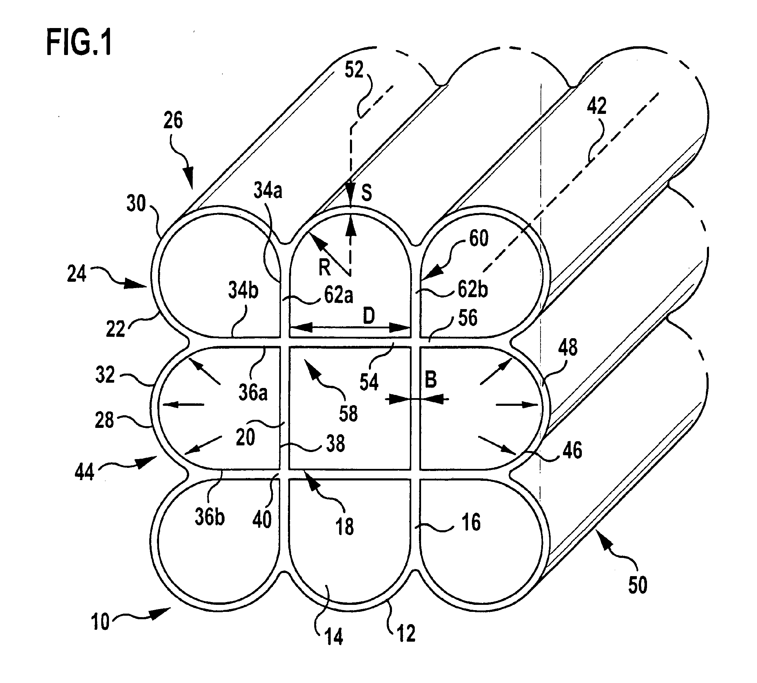

Ein erstes Ausführungsbeispiel eines Drucktanks, welcher in Figur 1 als Ganzes mit 10 bezeichnet ist, umfaßt eine Mehrzahl von Aufnahmekammern 12 zur Aufnahme eines unter Druck stehenden Fluids. Bei dem Fluid kann es sich beispielsweise um einen gasförmigen Kraftstoff wie Erdgas, Wasserstoff oder Methanol handeln.

In den Aufnahmekammern 12 ist jeweils ein Aufnahmeraum 14 gebildet, welcher durch Kammerwände 16 begrenzt ist. Die Aufnahmeräume 14 sind dabei in Reihen 24 und Spalten 26 angeordnet, wobei jede Reihe 24 und jede Spalte 26 eine Mehrzahl von Aufnahmeräumen 14 umfaßt. Bei dem in Figur 1 gezeigten Ausführungsbeispiel sind drei Reihen und drei Spalten vorgesehen.

Der Drucktank 10 weist drei grundsätzlich verschiedene Typen von Aufnahmekammern 12 auf: eine innere Aufnahmekammer 18 weist nur Kammerwände 20 auf, welche benachbarten Aufnahmeräumen zugewandt sind. Die Kammerwände 20 sind also innere Kammerwände, die nicht zum Außenraum weisen.

Aufnahmekammern, die zum Außenraum weisen, das heißt eine äußere Kammerwand aufweisen, lassen sich in grundsätzlich zwei verschiedene Typen unterscheiden, nämlich in eine Aufnahmekammer 22, welche sowohl bezüglich einer Reihe 24 als auch bezüglich einer Spalte 26 außen liegt und in eine Aufnahmekammer 28, welche entweder bezüglich einer Reihe 24 oder einer Spalte 26 außen liegt.

Die Aufnahmekammern 22 und 28 weisen jeweilige äußere Kammerwände 30, 32 auf, welche gewölbt ausgebildet sind. Sie sitzen dabei an jeweiligen ebenen Kammerwänden 34a, 34b bzw. 36a, 36b.

Die Aufnahmekammer 28 umfaßt gegenüberliegende Kammerwände 36a, 36b, die im wesentlichen parallel zueinander ausgerichtet sind. Eine Kammerwand 38, welche die Kammerwände 36a und 36b verbindet, bildet gleichzeitig eine Kammerwand für die innere Aufnahmekammer 18.

Die Kammerwände 34a, 34b der Aufnahmekammer 22 stoßen quer und im wesentlichen senkrecht aufeinander und sie sind miteinander verbunden.

Die Kammerwände 34a, 34 b und 36a, 36b, 38 sind außerhalb der gewölbten Kammerwände 30, 32 im wesentlichen eben ausgebildet. Stoßen entsprechende Kammerwände aneinander, so ist der jeweilige Übergang durch eine entsprechende Abrundung insbesondere kantenfrei ausgebildet (in der Figur 1 durch das Bezugszeichen 40 angedeutet), um Kraftbelastungsspitzen an einem solchen Übergang zu vermeiden.

Die Aufnahmeräume 14 erstrecken sich in eine jeweilige Längsrichtung 42, wobei die Längsrichtungen aller Aufnahmeräume 14 im wesentlichen parallel zueinander ausgerichtet sind.

Die Wölbung einer Aufnahmekammer 28, welche zum Außenraum hin entweder eine Reihe 24 oder eine Spalte 26 abschließt, entspricht im wesentlichen einer halbzylindrischen Schale, das heißt die Wölbung ist im Querschnitt kreisbogenförmig. Die entsprechende Zylinderachse ist parallel zur Längsrichtung 42 orientiert. Ein Innenradius R der entsprechenden gewölbten Kammerwand 32 entspricht dabei einem Innendurchmesser D des Aufnahmeraums 28 zwischen den parallel gegenüberliegenden Kammerwänden 36a und 36b.

Eine Aufnahmekammer 22, welche sowohl eine Reihe 24 als auch eine Reihe 26 zum Außenraum hin abschließt, weist eine gewölbte Kammerwand 30 auf, welche beispielsweise einer Dreiviertel-Zylinderschale entspricht.

Jeder Aufnahmekammer vom Typ 28, welche zu einer Außenseite 44 des Drucktanks 10 weisende gewölbte Kammerwand 32 aufweist, ist eine Aufnahmekammer 46 zugeordnet, welche auf der entgegengesetzten Seite des Drucktanks 10 liegt, das heißt mit ihrer gewölbten Kammerwand 48 zu einer der Außenseite 44 entgegengesetzten Außenseite 50 weist. Die Aufnahmekammern 22 und 46 auf gegenüberliegenden Seiten des Drucktanks 10 sind dabei im wesentlichen symmetrisch bezüglich einer Spiegelebene 52, welche parallel zu den Längsrichtungen 42 liegt. Bezüglich der Spalten 26 sind die entsprechenden Aufnahmekammern vom Typ 18 im wesentlichen spiegelsymmetrisch zu einer Spiegelebene, welche senkrecht zu der Spiegelebene 52 liegt.

Gleichermaßen sind auch Aufnahmekammern vom Typ 22 spiegelsymmetrisch angeordnet.

Die gewölbten Kammerwände 32, 48 gegenüberliegender Aufnahmekammern 28 und 46 stehen in einer kräftemäßiger Wirkverbindung. Dadurch lassen sich Kräfte, welche mittels des in den jeweiligen Aufnahmeräumen 14 aufgenommenen unter Druck stehenden Fluids auf die Kammerwände und insbesondere die gewölbten Kammerwände 32, 48 ausgeübt werden, auf die entgegengesetzte Seite ableiten, das heißt entsprechende Kräfte, welche auf die gewölbte Kammerwand 32 ausgeübt werden, lassen sich in Richtung der gewölbten Kammerwand 48 ableiten und die entsprechenden Kräfte, welche auf die gewölbte Kammerwand 48 ausgeübt werden, lassen sich in Richtung der gewölbten Kammerwand 32 ableiten.

Bei entsprechender im wesentlichen spiegelsymmetrischer Ausbildung lassen sich dann solche Kräfte in einer Querrichtung zu den Längsrichtungen 42 durch die symmetrische Ableitung im wesentlichen in reine Zugspannungen umwandeln, so daß die Kraftbelastung der Aufnahmekammern in der Aufnahmekammern-Anordnung des Drucktanks 10 insgesamt minimierbar ist.

Bei dem in Figur 1 gezeigten Ausführungsbeispiel sind die Kammerwände der Aufnahmekammern-Anordnung einstückig massiv ausgebildet, so daß sich direkt über die Wände die entsprechenden Kräfte von einer Seite auf die Gegenseite ableiten lassen und umgekehrt. Das bedeutet, daß beispielsweise die Kammerwand 36a der Aufnahmekammer 28 sich einstückig in eine Kammerwand 54 der Aufnahmekammer 18 fortsetzt und sich weiter in eine Kammerwand 56 der Aufnahmekammer 46 fortsetzt. An dieser entsprechenden Kammerwand-Einheit 58 sitzt dann an dem einen Ende insbesondere einstückig die gewölbte Kammerwand 32 und an dem anderen Ende die gewölbte Kammerwand 48.

Die Anordnung der Kammern, wie oben für eine Reihe 24 beschrieben, ist dabei quer dazu in einer Spalte 26 auf die gleiche Art und Weise ausgebildet, so daß auch hier die Kräfte über entsprechende Kammerwand-Einheiten 60 zu gegenüberliegenden Seiten hin ableitbar sind. Die Kammerwand-Einheiten 60 stehen dann quer und insbesondere senkrecht zu den Kammerwand-Einheiten 58. Die Anzahl der Kammerwand-Einheiten 60 entspricht der Zahl der Spalten abzüglich Eins und die Anzahl der Kammerwand-Einheiten 58 entspricht der Anzahl der Reihen abzüglich Eins.

Insbesondere sind die Aufnahmekammern dann auch bezüglich ihrem Abschluß in der Längsrichtung 42 so ausgebildet, daß die Kräfte im wesentlichen als reine Zugkräfte in der Längsrichtung 42 auf die gegenüberliegende Seite ableitbar sind.

Die Kammerwand-Einheiten 58 zur Ableitung der Kräfte quer zu den Längsrichtungen 52 sind parallel zueinander, wie auch die Kammerwand-Einheiten 60 parallel zueinander sind.

Die gewölbten Kammerwände 30 sind dabei mit den Kammerwänden 34a und 34b so verbunden, daß die Kräfte entsprechend in eine Kammerwand-Einheit 60 (Kammerwand 34a) als auch in eine Kammerwand-Einheit 58 (Kammerwand 34b) einleitbar sind.

Bei dem in Figur 1 gezeigten Ausführungsbeispiel, bei dem die Kammerwand-Einheiten 58 und 60 einstückig ausgebildet sind und auch die gewölbten Kammerwände 30, 32, 48 einstückig an diesen sitzen, bildet eine innere Kammerwand gleichzeitig eine Kammerwand für benachbarte Aufnahmeräume. So bildet die Kammerwand 34b eine Kammerwand für den Aufnahmeraum in der Aufnahmekammer 22 und in der Aufnahmekammer 28.

Eine Wandstärke S einer gewölbten Kammerwand 30, 32, 46 liegt vorzugsweise im Bereich P/60 und P/30, wobei P der Innendruck ist. Die Wandstärke S ist dabei in mm gemessen und der Innendruck P in bar. Insbesondere ist dabei die Wandstärke auf den maximalen Innendruck P ausgelegt, welcher typischerweise in der Größenordnung zwischen 250 bar und 600 bar liegt.

Die Innenbreite D eines Aufnahmeraums 14 zwischen parallel beabstandeten Kammerwänden 62a, 62b bzw. 36a, 36b und damit der Innenabstand zwischen benachbarten Kammerwand-Einheiten 58 bzw. 60 liegt vorzugsweise im Bereich zwischen P/6 und P/4, wobei wiederum D in mm gemessen wird und P in bar.

Eine Wandstärke B einer Kammerwand-Einheit 58 bzw. 60 und damit ein Abstand zwischen benachbarten Aufnahmeräumen 14 liegt vorzugsweise im Bereich zwischen 0,4 x S und 5 x S.

Typische Innenbreiten D liegen im Bereich zwischen 40 mm und 60 mm. Es können aber auch kleinere Werte gewählt werden, wenn dies erforderlich ist, weil es beispielsweise der Aufbau einer Kraftfahrzeugkarosserie so erfordert.

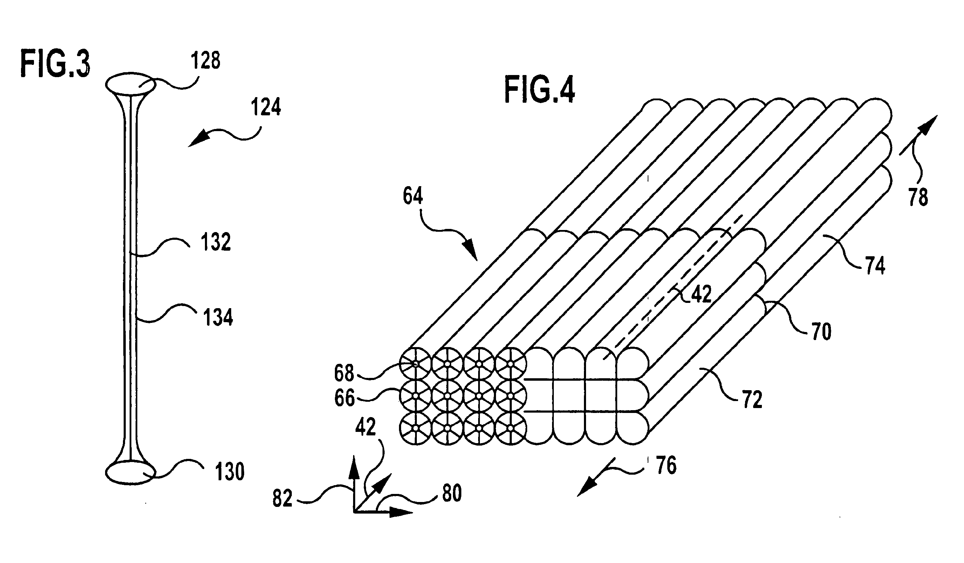

Solche reduzierten Werte von D liegen dann insbesondere in einer Höhenrichtung des Drucktanks vor (Richtung 82 in Figur 4).

Die Wandstärken S, die Innenbreiten D und die Wandstärken B können in den verschiedenen Richtungen (Längsrichtung 42 und Querrichtungen dazu) verschieden groß sein und auch bezüglich unterschiedlicher Aufnahmekammern unterschiedliche Werte annehmen.

Der erfindungsgemäße Drucktank 10 weist eine Vielzahl von relativ kleinen wabenförmigen Aufnahmekammern 12 mit entsprechenden Aufnahmeräumen 14 auf. Dadurch ist eine flexible Anpassung des Drucktanks 10 in seiner Form und Gestalt möglich. Er kann beispielsweise in die Karosserie eines Kraftfahrzeugs eingebaut werden, wobei Ausbuchtungen dort durch entsprechende Ausgestaltungen einzelner Aufnahmekammern und insbesondere äußerer Aufnahmekammern vom Typ 28 (Abschluß entweder einer Reihe 24 oder einer Spalte 26) berücksichtigbar sind. Ist dabei eine Modifikation erforderlich, die eine Kompensation der entsprechenden übertragbaren Kräfte nicht ermöglicht, so muß entsprechend die Form variiert werden und/oder die Wandstärke im Bereich einer solchen modifizierten äußeren Kammerwand erhöht werden. Die entsprechende Modifikation läßt sich dabei aber im wesentlichen auf die fragliche Aufnahmekammer beschränken, an welcher eine Einbuchtung des Drucktanks vorgesehen werden muß.

Die einstückige Aufnahmekammern-Anordnung läßt sich beispielsweise mittels eines Spritz- oder Druckgußverfahrens herstellen. Dies ist in Figur 4 schematisch anhand einer Aufnahmekammern-Anordnung 64 illustriert:

Zur Bildung der jeweiligen Aufnahmeräume 14 sind Innenkerne (Gießkerne) vorgesehen. Vorzugsweise werden Deckelelemente 66 (Kalotten) integral an den einzelnen Aufnahmekammern 12 hergestellt, das heißt mitgegossen. Es lassen sich damit diese Deckelelemente 66 formoptimieren und auch die inneren Spannungen in der Aufnahmekammern-Anordnung 64 minimieren, um so bei geringem Gewicht und hoher Stabilität ein großes Volumen aufnehmen zu können.

In den Deckelelementen 68 ist dabei vorzugsweise eine Öffnung vorgesehen, über die dann der Innenkern bzw. die Innenkerne zur Bildung der Aufnahmeräume 14 entfernt werden können. Die Öffnung 68 und die Innenkerne sind so aneinander angepaßt, daß eben die Aufnahmeräume 14 in der gewünschten Geometrie herstellbar sind und die Innenkerne über die Öffnung 68 nach Beendigung des Gießprozesses entfernbar sind. Eine solche Öffnung 68 kann später zum fluiddichten Abschluß des zugeordneten Aufnahmeraums 14 beispielsweise mit einem Schraubverschluß verschlossen werden, nachdem ein entsprechendes Schraubgewinde in dem Bereich der Öffnung 68 eingebracht wurde.

Um Aufnahmekammern mit einer größeren Erstreckung in der Längsrichtung 42 zu erhalten, kann es vorgesehen sein, daß die Innenkerne zur Ausbildung der Aufnahmekammern 12 geteilt werden. Dadurch entsteht eine Aufnahmekammern-Anordnung 64 mit einer Zwischenwand 70 zwischen sich in der Längsrichtung 42 erstreckenden Aufnahmekammern 72 und 74. Die Zwischenwand 70 kann dabei fluiddicht für die Aufnahmekammern 72, 74 ausgebildet sein oder einen Fluiddurchlaß ermöglichen.

Bei der Herstellung einer solchen Aufnahmekammern-Anordnung 64 lassen sich dann die Innenkerne (Gießkerne) für die offenen Kammern 72 in einer Richtung 76 herausziehen, während sie sich für die Aufnahmekammern 74 in der Gegenrichtung 78 herausziehen lassen.

Es ist auch möglich, eine einstückige Aufnahmekammern-Anordnung mittels eines Blasformverfahrens herzustellen. Dabei wird ein Blasformschlauch extrudiert und dabei werden Kammerwände erzeugt, welche in der Gesamtanordnung innere Kammerwände sind. Die gewölbten Kammerwände werden bei einem Blasformungsvorgang erzeugt, während die inneren Kammerwände im wesentlichen in derjenigen Form bleiben, in welcher sie beim Extrudierungsvorgang erzeugt wurden. Verstärkungen, die wie Zuganker wirken, können dann nachträglich eingeschossen werden oder beim Extrudieren eingelegt werden oder auch eingestrickt werden.

Durch das erfindungsgemäße Konzept mit den gewölbten Außenwänden, welche in wirksamer Kraftverbindung mit den gewölbten Außenwänden auf gegenüberliegenden Seiten des Drucktanks 10 stehen, lassen sich Querkräfte in Richtungen 80 und 82 ableiten (vgl. Figur 4) und dadurch als im wesentlichen reine Zugspannungen ausbilden. Dadurch wiederum läßt sich die Kraftbelastung der Kammerwände der Aufnahmekammern minimieren und so wiederum Wandstärken B und S minimieren. Bei hoher Stabilität wird dann eine hohe Volumeneffektivität zur Aufnahme des druckbeaufschlagten Fluids erreicht.

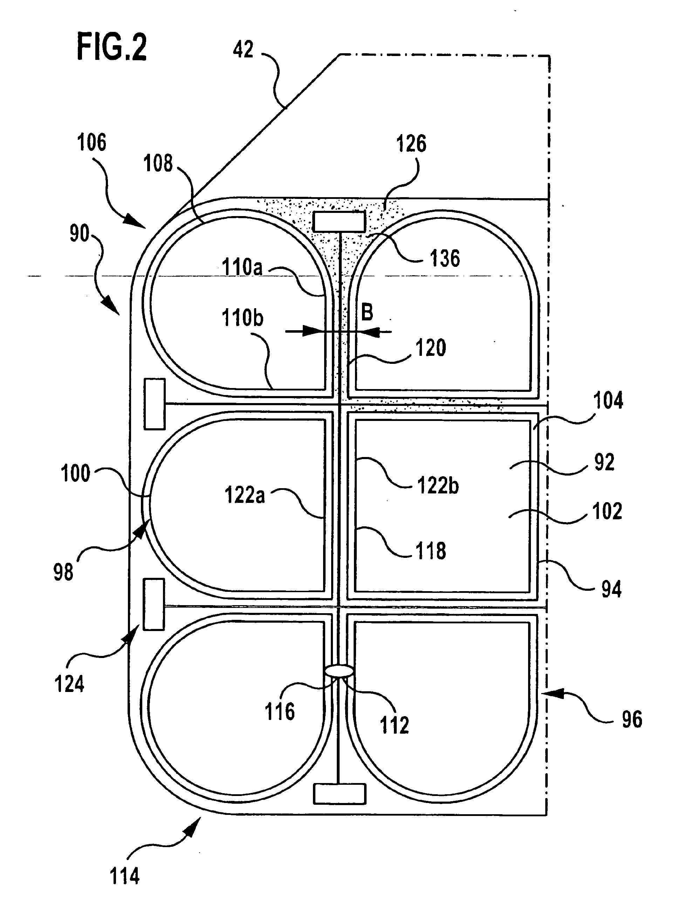

Bei einem zweiten Ausführungsbeispiel eines Drucktanks, welcher in Figur 2 als Ganzes mit 90 bezeichnet ist, sind entsprechende Aufnahmeräume 92 innerhalb jeweils einer Aufnahmehülle 94 gebildet, so daß jede Aufnahmekammer 96 eine solche Aufnahmehülle bzw. Liner umfaßt. Die Aufnahmehüllen 94 bilden Kammerwände aus, welche wie oben beschrieben zu einer Außenseite hin gewölbt sind und zu benachbarten Aufnahmeräumen hin im wesentlichen eben ausgebildet sind. Beispielsweise ist eine Aufnahmehülle aus Aluminium oder Magnesium hergestellt.

Eine Aufnahmehülle 98, welche entweder eine Reihe oder eine Spalte abschließt, weist eine gewölbte Hüllenwand 100 als Kammerwand auf. Eine innen liegende Aufnahmehülle 102 weist ebene Hüllenwände 104 als Kammerwände auf. Eine sowohl eine Reihe als auch eine Spalte abschließende Aufnahmehülle 106 weist eine gewölbte Hüllenwand 108 als Kammerwand auf, welche an quer zueinander stoßenden Hüllenwänden 110a und 110b sitzt.

Die Aufnahmeräume 92 erstrecken sich dabei wiederum in einer Längsrichtung 42.

Benachbarte Aufnahmehüllen sind über Zwischenwände und/oder Zwischenstege 112 miteinander verbunden. Bei der Herstellung einer entsprechenden Aufnahmehüllen-Anordnung 114 beispielsweise mittels eines Spritzguß- oder Druckgußverfahrens sind diese Zwischenstege 112, welche die einzelnen Aufnahmehüllen in einem Verbund halten, integral hergestellt. Entsprechende Zwischenstege 112 verbinden dann gegenüberliegende Aufnahmehüllen, um diese in einem Verbund zu halten.

Insbesondere weist ein Zwischensteg 112 einen Übergangskanal 116 auf, so daß eine fluiddichte Verbindung zwischen benachbarten Aufnahmeräumen herrscht. Dieser Übergangskanal 116 läßt sich in einem Spritzguß- oder Druckgußverfahren mittels eines entsprechend geformten Innenkerns integral herstellen.

Zwischen Hüllenwänden 118 benachbarter Aufnahmeräume 92 sind jeweils Zwischenräume 120 gebildet, das heißt benachbarte Aufnahmehüllen sind abgesehen von den Zwischenwänden oder Zwischenstegen 112 beabstandet zueinander angeordnet.

Gegenüberliegende Hüllenwände 122a, 122b benachbarter Aufnahmeräume 92 sind dabei im wesentlichen parallel zueinander, so daß der zwischen ihnen gebildete Zwischenraum im Querschnitt vorzugsweise rechteckförmig und in ihrer Raumgeometrie beispielsweise quaderförmig ist.

In den Zwischenräumen 120 sind Kraftübertragungsvorrichtungen angeordnet, durch welche Kräfte von einer Seite des Drucktanks auf die Gegenseite ableitbar sind und umgekehrt und welche gegebenenfalls die Aufnahmekammern aneinander halten, um den Verbund in der Aufnahmehüllen-Anordnung 114 zu bilden. Die Zwischenwände oder Zwischenstege 112 sind dabei Teil solcher Kraftübertragungsvorrichtungen.

Alternativ oder zusätzlich können auch Zuganker 124 von den Kraftübertragungsvorrichtungen umfaßt sein bzw. diese bilden.

Eine Kraftübertragungsvorrichtung dient dazu, wie oben beschrieben, Kräfte von den gewölbten Kammerwänden innerhalb einer Reihe oder einer Spalte auf die entgegengesetzte Seite des Drucktanks 90 abzuleiten, um so Kräfte, welche an den gewölbten Kammerwänden auf gegenüberliegenden gewölbten Hüllenwänden anstehen, als im wesentlichen reine Zugkräfte ausbilden zu können. Dies kann dabei in den Längsrichtungen 42 erfolgen und auch in den Querrichtungen.

Erfindungsgemäß ist es vorgesehen, daß die Zwischenräume 120 zur Bildung von Zwischenwänden mit einem Spritzguß- oder Druckgußmaterial ausgefüllt werden. Es kann sich dabei um das gleiche Material handeln, mit welchem die Aufnahmehüllen hergestellt sind.

Es kann auch vorgesehen sein, daß die Zwischenräume 120 mit einem Kunststoffmaterial 126 ausgegossen bzw. ausgespritzt werden, bei dem es sich insbesondere um ein Kurzfaser-Kunststoffmaterial handelt, das heißt einen Faserverbundwerkstoff, welcher kurzfaserverstärkt ist und mit dem sich die Zwischenräume 120 ausspritzen lassen. Mit solchen Werkstoffen lassen sich Festigkeiten bis zu 250 MPa oder höher erreichen, wobei die Ausfüllung in einer Spritzgußmaschine durchführbar ist. Ein mögliches Material ist unter der Bezeichnung GRIVORY HTV-SH1 oder GRIVORY GC-4H bekannt. Durch ein solches Kunststoffmaterial, welches näherungsweise isotrope mechanische Eigenschaften aufweist, lassen sich Kräfte in den Querrichtungen zu der Längsrichtung 42 und in diese Längsrichtung 42 übertragen, das heißt es lassen sich Kräfte auch durch Kreuzungsbereiche in den Zwischenräumen 120 übertragen, bei welchen die Kraftübertragung einerseits in einer ersten Richtung (beispielsweise die Richtung 80) und andererseits in weiteren quer und insbesondere senkrecht dazu liegenden Richtungen (beispielsweise die Richtung 82 und 42) erfolgen muß.

Durch das Vorsehen von Zugankern 124 in den Zwischenräumen 120 läßt sich die Kraftübertragung zwischen gegenüberliegenden Seiten des Drucktanks 90 noch verbessern. Ein solcher Zuganker 124 ist beispielsweise aus hochfestem Stahl, Leichtmetall oder mittels einem Faserverbundwerkstoff-Langfaser-Material hergestellt (Figur 3). Er umfaßt an gegenüberliegenden Enden Tellerelemente 128 und 130, welche eine entsprechend große Fläche aufweisen, auf der Kräfte abgeleitet werden können. Ein solches Tellerelement 128, 130 ist insbesondere aus Stahl gefertigt.

Die beiden Tellerelemente 128 und 130 sind bei einer Variante eines Ausführungsbeispiels mittels eines Stahldrahts 132 miteinander verbunden. Über diesen wird eine bestimmte Eigenstabilität des Zugankers 124 erreicht. Er ist aus einem Faserverbundwerkstoff 134 umwickelt, welcher insbesondere einen hohen Anteil an Langfasern enthält. Die Kraftübertragungsrichtung ist dadurch optimiert bezüglich der Längsrichtung dieses Stahldrahts 132.

Die Zuganker 124 sitzen beabstandet zueinander in den Zwischenräumen 120 in allen Richtungen 80, 82 und 42 (vgl. Figur 4). Sie sorgen über die verbesserte Kraftableitung zwischen gegenüberliegenden Seiten und damit verbesserte Kraftübertragung für eine erhöhte Festigkeit des Drucktanks 90 im gesamten. Mit ihrer Hilfe lassen sich die Wandstärken zwischen benachbarten Aufnahmehüllen verringern, um so wiederum das Gewicht des Drucktanks 90 verringern zu können und damit dessen Volumeneffektivität erhöhen zu können.

Die Zuganker werden ungespannt eingebaut.

Bei der Herstellung des Drucktanks 90 werden, nachdem die Aufnahmehüllen-Anordnung 114 hergestellt ist, die Zuganker 124 in den jeweiligen Ankerebenen in den Zwischenräumen 120 eingesetzt. Diese werden durch eine entsprechende Vorrichtung in den Zwischenräumen120 gehalten, um die Zwischenräume 120 beispielsweise mit dem Kunststoffmaterial 126 verfüllen zu können.

Die Zuganker 124 werden dabei so eingelegt, daß ihre Tellerelemente 128, 130 in einem Bereich 136 der Zwischenräume 120 liegen, in dem diese sich zu einer Außenseite des Drucktanks 190 hin verbreitern. Damit läßt sich auch die Krafteinleitung und damit wiederum die Kraftübertragung auf die gegenüberliegende Seite optimieren.

Die Dimensionierung der Aufnahmeräume ist dabei grundsätzlich so wie oben bereits im Zusammenhang mit dem ersten Ausführungsbeispiel beschrieben.

Insbesondere ist der Abstand B zwischen gegenüberliegenden Innenseiten benachbarter Aufnahmehüllen zwischen 0,4 x S und 2 x S. Durch die Verwendung von Zugankern 124 läßt sich diese Breite reduzieren.

Ein Zuganker 124 ist dabei entsprechend aus einem Material gefertigt, welches einen hohen E-Modul aufweist, damit für den Zuganker 124 keine zu großen absoluten elastischen Dehnungen auftreten.

Erfindungsgemäß ist es vorgesehen, daß auf gewölbte Kammerwände wirkende Kräfte übertragbar sind auf insbesondere reihenweise oder spaltenweise bzw. in Längsrichtung 42 gegenüberliegende gewölbte Kammerwände. Dadurch wiederum lassen sich die entsprechenden abgeleiteten Kräfte im wesentlichen als reine Zugkräfte ausbilden, so daß bei der Möglichkeit, Wandstärken zu verringern, trotzdem eine hohe Festigkeit realisierbar ist. Dadurch wiederum läßt sich gleichzeitig bei hoher Stabilität des erfindungsgemäßen Drucktanks 10 bzw. 90 eine hohe Volumeneffektivität erreichen.

Es kann dabei noch vorgesehen sein, daß Anschlüsse und gegebenenfalls Verbindungsstücke zwischen einzelnen Aufnahmeräumen in ein oder mehrere Deckelelemente 66 integriert sind oder mit diesen verbunden sind.

Es kann weiterhin vorgesehen sein, daß ein Drucktank als Ganzes umspritzt ist, um so einen Oberflächenschutz zu erreichen.

Es kann auch noch zusätzlich vorgesehen sein, daß die gesamte Außenseite des Drucktanks mit einem Faserverbundwerkstoff umwickelt ist, welcher imprägniert wurde.

Durch die erfindungsgemäße Ausgestaltung, bei der zum Außenraum weisende Kammerwände gewölbt ausgebildet sind und gewölbte Kammerwände von Aufnahmekammern, welche gegenüberliegend auf entgegengesetzten Seiten des Drucktanks angeordnet sind, in kräftemäßiger Wirkverbindung stehen, ergeben sich zahlreiche Variationsmöglichkeiten bezüglich der Ausgestaltung des Drucktanks.

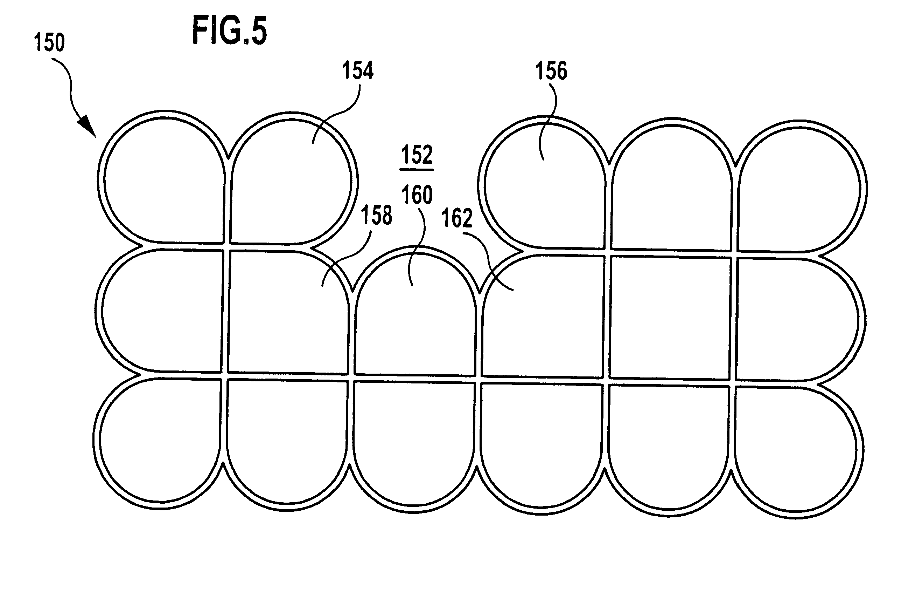

So können, wie beispielhaft anhand Figur 5 gezeigt, Aufnahmekammern innerhalb einer Reihe 150 weggelassen werden, um einen Freiraum 152 zwischen gegenüberliegenden äußeren Aufnahmekammern 154, 156 zu bilden. Dieser Freiraum kann beispielsweise zur Durchführung einer oder mehrerer Leitungen genutzt werden und/oder zur Aufnahme einer Haltevorrichtung zur Fixierung des Drucktanks beispielsweise an einem Fahrzeug.

Die den Freiraum 152 begrenzenden Aufnahmekammern 154, 156 sowie weitere diesen begrenzende Aufnahmekammern 158, 160, 162 sind in Relation zu den gegenüberliegend angeordneten Aufnahmekammern so gewölbt ausgebildet, daß sie in kräftemäßiger Wirkverbindung stehen, um eben eine Kräfteableitung zu bewirken.

Die entsprechenden Kammerwände dieser Zellen, welche dem Freiraum 152 zugewandt sind, sind dabei insbesondere gewölbt ausgebildet.

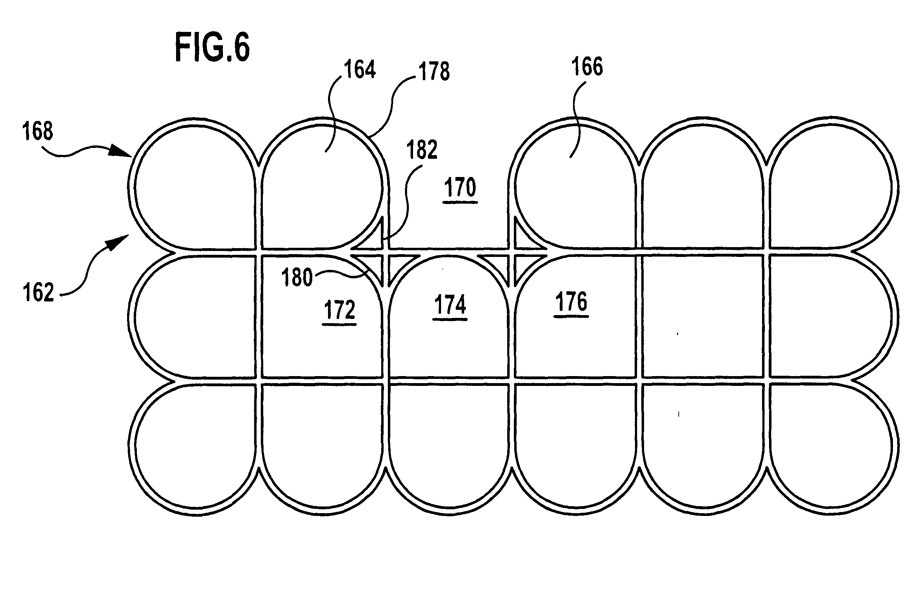

Bei einem in Figur 6 gezeigten Ausführungsbeispiel ist in einem Zellverbund 162 zwischen Aufnahmekammern 164, 166, die an einer Reihe 168 außen liegen, ebenfalls ein Freiraum 170 gebildet. Die entsprechenden, den Freiraum 170 begrenzenden Zellen 164, 166 sowie 172, 174, 176 weisen gewölbte Kammerwände auf. Beispielsweise weist die Aufnahmekammer 164 eine gewölbte Kammerwand 178 auf und die Aufnahmekammer 172 eine gewölbte Kammerwand 180 auf.

Es kann jedoch vorgesehen sein, daß die Kammerwände über Stegelemente 182 miteinander verbunden sind, wobei diese Stegelemente insbesondere kollinear zu ebenen Kammerwänden ausgerichtet sind. Dadurch läßt sich um den Freiraum 170 die Stabilität des entsprechenden Drucktanks erhöhen, da für zusätzliche Verbindungen und insbesondere Kraftwirkungsverbindungen zwischen benachbarten Aufnahmekammern gesorgt ist.

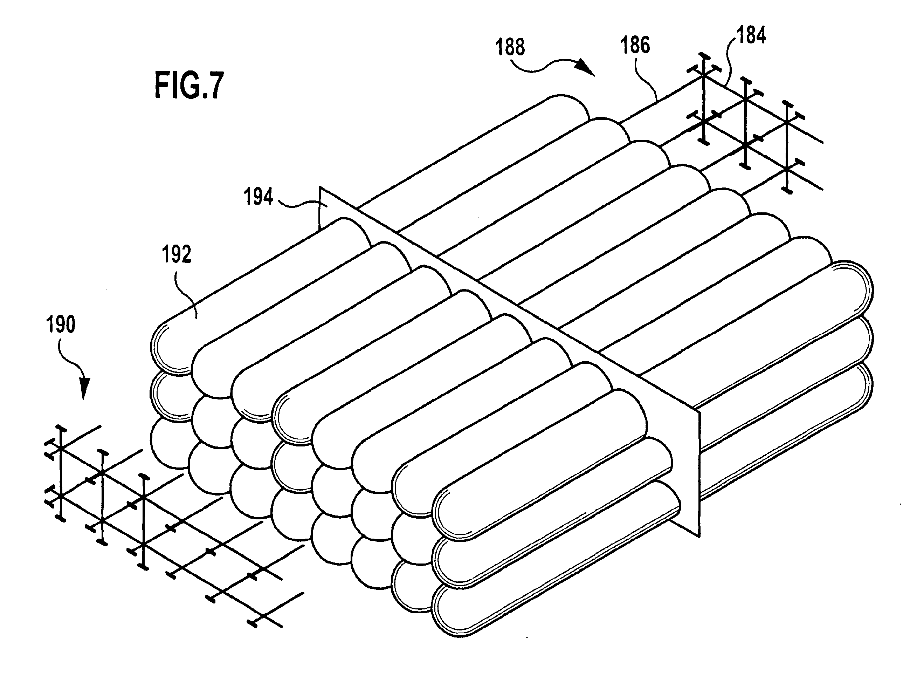

Zur Herstellung eines erfindungsgemäßen Drucktanks ist es möglich, wie in Figur 7 beispielhaft gezeigt, ein Gitter 184 aus Zugankern 186 herzustellen. In diesem Gitter 184, welches beispielsweise ein dreidimensionales kubisches Gitter ist, sind die Zuganker 186 miteinander verbunden, so daß ein Zugankerverbund gebildet ist.

Es wird dabei beispielsweise ein erstes Gitter 188 hergestellt und ein zweites Gitter 190 hergestellt. Diese beiden Gitter 188, 190 werden anschließend über einen Hüllenverbund 192 geschoben.

Die gesamte Anordnung wird anschließend mit Kunststoff umspritzt, wobei beispielsweise ein Kurzfasermaterial vorgesehen ist.

Vorzugsweise ist dabei, wie oben anhand der Figur 3 beschrieben, eine Zwischenwand 194 vorgesehen. In dieser sind Übergangskanäle gebildet, um die Aufnahmeraumteile einer Aufnahmekammer fluidwirksam miteinander zu verbinden.

## Patentansprüche

1. Drucktank zur Aufnahme eines unter Druck stehenden Fluids mit einer Mehrzahl von Aufnahmekammern (12), welche jeweils einen zwischen einstückig ausgebildeten Kammerwänden gebildeten Aufnahmeraum (14; 92) umfassen, wobei zum Außenraum weisende Kammerwände (30, 32; 100) gewölbt ausgebildet sind und wobei gewölbte Kammerwände (32, 48) von Aufnahmekammern (28, 46), welche gegenüberliegend auf entgegengesetzten Seiten des Drucktanks angeordnet sind, in kräftemäßiger Wirkverbindung stehen, wobei eine Kammerwand (38) eines Aufnahmeraums (14), welche einem benachbarten Aufnahmeraum zugewandt ist, eben ausgebildet ist und eine eingeleitete Zugspannung als durchgehende Kraft bis zur gegenüberliegenden Seite des Drucktanks durchleitet, wobei jede ebene Kammerwand (34a, 34b, 36b) zum Außenraum hin durch eine gewölbte Kammerwand, welche einstückig an den entsprechenden ebenen Kammerwänden sitzt, geschlossen ist und wobei eine Mehrzahl von Aufnahmekammern-Reihen (24) und eine Mehrzahl von Aufnahmekammern-Spalten (26) vorgesehen sind, wobei gegenüberliegende ebene Kammerwände (36a, 36b) parallel ausgerichtet sind und ebene Kammerwände (34a, 34b) einer Aufnahmekammer (12) senkrecht aufeinander stoßen.

2. Drucktank nach Anspruch 1, **dadurch gekennzeichnet, dass** die Wölbung gegenüberliegender auf entgegengesetzten Seiten des Drucktanks angeordneter Aufnahmekammern (28, 46) entgegengesetzt ist.

3. Drucktank nach Anspruch 1 oder 2, **dadurch gekennzeichnet, dass** gegenüberliegende auf entgegengesetzten Seiten des Drucktanks angeordnete Aufnahmekammern (28, 46) spiegelsymmetrisch zueinander ausgebildet sind.

4. Drucktank nach einem der vorangehenden Ansprüche, **dadurch gekennzeichnet, dass** die Aufnahmekammern (22, 28, 46) im Drucktank so angeordnet und so ausgebildet sind, dass eine auf eine äußere Kammerwand (30, 32, 48) wirkende Kraft durch den Drucktank hindurch auf die entgegengesetzte Seite des Drucktanks ableitbar ist.

5. Drucktank nach einem der vorangehenden Ansprüche, **dadurch gekennzeichnet, dass** aneinanderstoßende Kammerwände (36b, 38) mindestens dem Aufnahmeraum (14) zugewandt einen kantenfreien Übergang (40) aufweisen.

6. Drucktank nach einem der vorangehenden Ansprüche, **dadurch gekennzeichnet, dass** die Aufnahmeräume (14) sich im Wesentlichen parallel zu einer Längsrichtung (42) erstrecken.

7. Drucktank nach einem der vorangehenden Ansprüche, **dadurch gekennzeichnet, dass** eine Wandstärke (S) einer gewölbten Kammerwand (30, 32) im Bereich zwischen P/60 und P/30 liegt, wobei P der Innendruck in bar ist und die Wandstärke in mm gemessen ist.

8. Drucktank nach einem der vorangehenden Ansprüche, **dadurch gekennzeichnet, dass** ein Abstand (B) zwischen benachbarten Aufnahmeräumen (14) 0,4 x S und 5 x S liegt, wobei S die Wandstärke einer gewölbten Kammerwand (30; 32) ist.

9. Drucktank nach einem der vorangehenden Ansprüche, **dadurch gekennzeichnet, dass** eine Innenbreite (D) eines Aufnahmeraums (14) zwischen im wesentlichen parallelen Kammerwänden (62a, 62b), gemessen in mm, zwischen P/6 und P/4 liegt, wobei P der Innendruck in bar ist.

10. Drucktank nach einem der vorangehenden Ansprüche, **dadurch gekennzeichnet, dass** eine gewölbte Kammerwand (30; 32) im Querschnitt kreisbogenförmig ausgebildet ist.

11. Drucktank nach einem der vorangehenden Ansprüche, **dadurch gekennzeichnet, dass** eine Breite (D) eines Aufnahmeraums (14) zwischen parallelen Kammerwänden (62a, 62b) zwischen 30 mm und 70 mm liegt.

12. Drucktank nach einem der vorangehenden Ansprüche, **dadurch gekennzeichnet, dass** die Aufnahmekammern (18, 22, 28) einstückig miteinander verbunden sind.

13. Drucktank nach Anspruch 12, **dadurch gekennzeichnet, dass** gewölbte Kammerwände (32, 48), welche gegenüberliegend auf entgegengesetzten Seiten des Drucktanks angeordnet sind, durch eine einstückige Wand (58) miteinander verbunden sind.

14. Drucktank nach Anspruch 12 oder 13, **dadurch gekennzeichnet, dass** außerhalb der gewölbten Kammerwände eine Kammerwand (38) für einen Aufnahmeraum (14) gleichzeitig eine Kammerwand für einen benachbarten Aufnahmeraum bildet.

15. Drucktank nach einem der vorangehenden Ansprüche, **dadurch gekennzeichnet, dass** die Aufnahmekammern-Anordnung (64) durch ein Spritzguss- und/oder Druckgussverfahren hergestellt ist.

16. Drucktank nach einem der vorangehenden Ansprüche, **dadurch gekennzeichnet, dass** ein Aufnahmeraum (92) von einer Aufnahmehülle (94) aus einem fluiddichten Material begrenzt ist.

17. Drucktank nach einem der Ansprüche 1 bis 12, **dadurch gekennzeichnet, dass** ein Aufnahmeraum (92) von einer Aufnahmehülle (94) begrenzt ist, wobei zwischen den Aufnahmehüllen (94) beabstandeter Aufnahmeräume (92) ein Zwischenraum (120) gebildet ist und in den Zwischenräumen (120) Kraftübertragungsvorrichtungen (112; 124; 126) angeordnet sind.

18. Drucktank nach Anspruch 17, **dadurch gekennzeichnet, dass** eine Aufnahmehülle (94) aus einem fluiddichten Material hergestellt ist.

19. Drucktank nach Anspruch 17 oder 18, **dadurch gekennzeichnet, dass** ein Zwischenraum (120) zwischen benachbarten Aufnahmehüllen (94) eine im Wesentlichen quaderförmige Gestalt hat.

20. Drucktank nach einem der Ansprüche 17 bis 19, **dadurch gekennzeichnet, dass** die Kraftübertragungsvorrichtungen Zwischenstege (122) und/oder Zwischenwände (126) umfassen, welche zwischen benachbarten Aufnahmehüllen (94) angeordnet sind.

21. Drucktank nach Anspruch 20, **dadurch gekennzeichnet, dass** die Zwischenstege und/oder Zwischenwände (122) integral bei der Herstellung der Aufnahmehüllen (94) gebildet werden.

22. Drucktank nach Anspruch 20 oder 21, **dadurch gekennzeichnet, dass** ein Zwischensteg und/oder eine Zwischenwand (122) einen Übergangskanal (124) für das Fluid zwischen benachbarten Aufnahmeräumen (92) aufweist.

23. Drucktank nach einem der Ansprüche 17 bis 22, **dadurch gekennzeichnet, dass** eine Aufnahmehülle (94) durch ein Spritzguss- oder Druckgussverfahren hergestellt ist.

24. Drucktank nach einem der Ansprüche 17 bis 23, **dadurch gekennzeichnet, dass** die Kraftübertragungsvorrichtungen Zwischenwände (126) umfassen, welche in den Zwischenräumen (120) angeordnet sind.

25. Drucktank nach Anspruch 24, **dadurch gekennzeichnet, dass** eine Zwischenwand (126) durch Ausfüllung eines Zwischenraums (120) hergestellt ist.

26. Drucktank nach Anspruch 25, **dadurch gekennzeichnet, dass** eine Zwischenwand (126) durch ein Druckguss- oder Spritzgussverfahren oder Blasformverfahren hergestellt ist.

27. Drucktank nach einem der Ansprüche 24 bis 26, **dadurch gekennzeichnet, dass** eine Zwischenwand (126) aus dem gleichen Material hergestellt ist wie die Aufnahmehüllen (94).

28. Drucktank nach einem der Ansprüche 24 bis 27, **dadurch gekennzeichnet, dass** eine Zwischenwand (126) aus einem Kurzfaser-Material hergestellt ist.

29. Drucktank nach einem der Ansprüche 17 bis 28, **dadurch gekennzeichnet, dass** die Kraftübertragungsvorrichtungen Zuganker (124) umfassen, welche gegenüberliegende Seiten des Drucktanks miteinander kräftemäßig verbinden.

30. Drucktank nach Anspruch 29, **dadurch gekennzeichnet, dass** in einem Zwischenraum (120) eine Mehrzahl von beabstandeten Zugankern (124) angeordnet sind.

31. Drucktank nach Anspruch 29 oder 30, **dadurch gekennzeichnet, dass** Zuganker (124) in Querrichtungen (80, 82) zur Längsrichtung (42) der Aufnahmeräume (92) orientiert sind.

32. Drucktank nach einem der Ansprüche 29 bis 31, **dadurch gekennzeichnet, dass** Zuganker (124) im Wesentlichen in Längsrichtung (42) der Aufnahmeräume (92) orientiert sind.

33. Drucktank nach einem der Ansprüche 29 bis 32, **dadurch gekennzeichnet, dass** ein Zuganker (124) mit gegenüberliegenden Tellerelementen (128, 130) versehen ist.

34. Drucktank nach Anspruch 33, **dadurch gekennzeichnet, dass** ein Tellerelement (128; 130) in einem Bereich (136) eines Zwischenraums (120) positioniert ist, in welchem sich dieser zur Außenseite hin erweitert.

35. Drucktank nach Anspruch 34, **dadurch gekennzeichnet, dass** ein Zuganker (124) Tellerelemente (128, 130) umfasst, welche durch einen oder mehrere Metalldrähte (132) verbunden sind.

36. Drucktank nach Anspruch 35, **dadurch gekennzeichnet, dass** um den oder die Metalldrähte (132) ein Faserverbundwerkstoff (134) angeordnet ist.

37. Drucktank nach einem der Ansprüche 29 bis 36, **dadurch gekennzeichnet, dass** die Zuganker (124) in den Zwischenräumen (120) eingebettet sind.

38. Drucktank nach einem der Ansprüche 29 bis 37, **dadurch gekennzeichnet, dass** die Zuganker (124) ohne Vorspannung in den Zwischenräumen (120) angeordnet sind.

39. Drucktank nach einem der Ansprüche 33 bis 38, **dadurch gekennzeichnet, dass** Tellerelemente (128; 130) von Zugankern (124) in den Zwischenbereichen (136) zwischen gewölbten Kammerwänden benachbarter Aufnahmehüllen positioniert sind.

40. Drucktank nach einem der vorangehenden Ansprüche, **dadurch gekennzeichnet, dass** ein Deckelelement (68) zur Begrenzung eines Aufnahmeraums (12; 92) in der Längsrichtung (42) integral an Kammerwänden gebildet ist.

## Claims

1. Pressure tank for receiving a pressurized fluid, having a plurality of receiving chambers (12) each comprising a receiving space (14; 92) formed between integrally formed chamber walls, wherein chamber walls (30, 32; 100) facing the exterior are of a curved configuration and wherein curved chamber walls (32, 48) of receiving chambers (28, 46) that are oppositely disposed at opposite sides of the pressure tank are in operative force-transmitting connection, wherein a chamber wall (38) of a receiving space (14) facing an adjacent receiving space is of a planar configuration and transmits an introduced tensile stress as a through-force to the opposite side of the pressure tank, wherein each planar chamber wall (34a, 34b, 36b) is closed off in the direction of the exterior by a curved chamber wall that is seated integrally on the corresponding planar chamber walls, and wherein a plurality of receiving chamber rows (24) and a plurality of receiving chamber columns (26) are provided, wherein opposite planar chamber walls (36a, 36b) are aligned parallel and planar chamber walls (34a, 34b) of a receiving chamber (12) meet one another at right angles.

2. Pressure tank according to claim 1, **characterized in that** the curvature of opposite receiving chambers (28, 46) disposed at opposite sides of the pressure tank is inverse.

3. Pressure tank according to claim 1 or 2, **characterized in that** opposite receiving chambers (28, 46) disposed at opposite sides of the pressure tank are configured mirror-symmetrically relative to one another.

4. Pressure tank according to one of the preceding claims, **characterized in that** the receiving chambers (22, 28, 46) in the pressure tank are disposed and configured in such a way that a force acting upon an outer chamber wall (30, 32, 48) can be conducted away through the pressure tank to the opposite side of the pressure tank.

5. Pressure tank according to one of the preceding claims, **characterized in that** mutually abutting chamber walls (36b, 38) have an edge-free transition (40) at least facing the receiving space (14).

6. Pressure tank according to one of the preceding claims, **characterized in that** the receiving spaces (14) extend substantially parallel to a longitudinal direction (42).

7. Pressure tank according to one of the preceding claims, **characterized in that** a wall thickness (S) of a curved chamber wall (30, 32) is in the region of P/60 and P/30, wherein P is the internal pressure in bar and the wall thickness is measured in mm.

8. Pressure tank according to one of the preceding claims, **characterized in that** a spacing (B) between adjacent receiving spaces (14) is 0.4 x S and 5 x S, wherein S is the wall thickness of a curved chamber wall (30; 32).

9. Pressure tank according to one of the preceding claims, **characterized in that** an inside width (D) of a receiving space (14) between substantially parallel chamber walls (62a, 62b), measured in mm, is between P/6 and P/4, wherein P is the internal pressure in bar.

10. Pressure tank according to one of the preceding claims, **characterized in that** a curved chamber wall (30; 32) is configured to be circular-arc-shaped in cross section.

11. Pressure tank according to one of the preceding claims, **characterized in that** a width (D) of a receiving space (14) between parallel chamber walls (62a, 62b) is between 30 mm and 70 mm.

12. Pressure tank according to one of the preceding claims, **characterized in that** the receiving chambers (18, 22, 28) are integrally connected to one another.

13. Pressure tank according to claim 12, **characterized in that** curved chamber walls (32, 48) that are oppositely disposed at opposite sides of the pressure tank are connected to one another by an integral wall (58).

14. Pressure tank according to claim 12 or 13, **characterized in that** outside of the curved chamber walls a chamber wall (38) for a receiving space (14) simultaneously forms a chamber wall for an adjacent receiving space.

15. Pressure tank according to one of the preceding claims, **characterized in that** the receiving chamber arrangement (64) is manufactured by an injection moulding and/or die casting method.

16. Pressure tank according to one of the preceding claims, **characterized in that** a receiving space (92) is delimited by a receiving enclosure (94) made of a fluid-tight material.

17. Pressure tank according to one of claims 1 to 12, **characterized in that** a receiving space (92) is delimited by a receiving enclosure (94), wherein between the receiving enclosures (94) of spaced-apart receiving spaces (92) a gap (120) is formed and force transmission devices (112; 124; 126) are disposed in the gaps (120).

18. Pressure tank according to claim 17, **characterized in that** a receiving enclosure (94) is manufactured from a fluid-tight material.

19. Pressure tank according to claim 17 or 18, **characterized in that** a gap (120) between adjacent receiving enclosures (94) has a substantially cuboidal shape.

20. Pressure tank according to one of claims 17 to 19, **characterized in that** the force transmission devices comprise intermediate webs (122) and/or intermediate walls (126), which are disposed between adjacent receiving enclosures (94).

21. Pressure tank according to claim 20, **characterized in that** the intermediate webs and/or intermediate walls (122) are integrally formed during manufacture of the receiving enclosures (94).

22. Pressure tank according to claim 20 or 21, **characterized in that** an intermediate web and/or an intermediate wall (122) has a transfer channel (124) for the fluid between adjacent receiving spaces (92).

23. Pressure tank according to one of the claims 17 to 22, **characterized in that** a receiving enclosure (94) is manufactured by an injection moulding or die casting method.

24. Pressure tank according to one of claims 17 to 23, **characterized in that** the force transmission devices comprise intermediate walls (126) that are disposed in the gaps (120).

25. Pressure tank according to claim 24, **characterized in that** an intermediate wall (126) is manufactured by filling a gap (120).

26. Pressure tank according to claim 25, **characterized in that** an intermediate wall (126) is manufactured by a die casting or injection moulding method or a blow moulding method.

27. Pressure tank according to one of claims 24 to 26, **characterized in that** an intermediate wall (126) is manufactured from the same material as the receiving enclosures (94).

28. Pressure tank according to one of claims 24 to 27, **characterized in that** an intermediate wall (126) is manufactured from a short-fibre material.

29. Pressure tank according to one of claims 17 to 28, **characterized in that** the force transmission devices comprise tie rods (124), which connect opposite sides of the pressure tank to one another in force-transmitting manner.

30. Pressure tank according to claim 29, **characterized in that** in a gap (120) a plurality of spaced-apart tie rods (124) are disposed.

31. Pressure tank according to claim 29 or 30, **characterized in that** tie rods (124) are oriented in transverse directions (80, 82) relative to the longitudinal direction (42) of the receiving spaces (92).

32. Pressure tank according to one of claims 29 to 31, **characterized in that** tie rods (124) are oriented substantially in longitudinal direction (42) of the receiving spaces (92).

33. Pressure tank according to one of claims 29 to 32, **characterized in that** a tie rod (124) with opposite plate elements (128, 130) is provided.

34. Pressure tank according to claim 33, **characterized in that** a plate element (128; 130) is positioned in a region (136) of a gap (120), in which said gap (120) widens in the direction of the exterior.

35. Pressure tank according to claims 34, **characterized in that** a tie rod (124) comprises plate elements (128, 130) that are connected by one or more metal wires (132).

36. Pressure tank according to claim 35, **characterized in that** a composite fibre material (134) is disposed around the metal wire or wires (132).

37. Pressure tank according to one of claims 29 to 36, **characterized in that** the tie rods (124) are embedded in the gaps (120).

38. Pressure tank according to one of claims 29 to 37, **characterized in that** the tie rods (124) are disposed without initial tension in the gaps (120).

39. Pressure tank according to one of claims 33 to 38, **characterized in that** plate elements (128; 130) of tie rods (124) are positioned in the intermediate regions (136) between curved chamber walls of adjacent receiving enclosures.

40. Pressure tank according to one of the preceding claims, **characterized in that** a cover element (68) for delimiting a receiving space (12; 92) in the longitudinal direction (42) is integrally formed on chamber walls.

## Revendications

1. Réservoir sous pression destiné à recevoir un fluide sous pression, comportant une pluralité de cellules de réception (12), qui englobent chacune un espace de réception (14 ; 92) formé entre des parois réalisées d'un seul tenant, dans lequel des parois (30, 32 ; 100) orientées vers l'espace extérieur sont réalisées avec une forme courbe et dans lequel lesdites parois courbes (32, 48) des cellules de réception (28, 46), disposées face à face sur des côtés opposés du réservoir sous pression, sont en liaison active par force, dans lequel une paroi (38) d'un espace de réception (14), qui est orientée vers un espace de réception adjacent, est réalisée plane et un effort de traction introduit est transmis en tant que force continue jusque sur le côté en face du réservoir sous pression, chaque paroi plane (34a, 34b, 36b) étant fermée vers l'espace extérieur par une paroi courbe qui est posée d'un seul tenant sur les parois planes correspondantes, et dans lequel il est prévu une pluralité de rangées (24) de cellules de réception et une pluralité de fentes (26) entre les cellules de réception, les parois planes (36a, 36b) face à face étant orientées parallèlement et les parois planes (34a, 34b) d'une cellule de réception (12) étant aboutées perpendiculairement l'une contre l'autre.

2. Réservoir sous pression selon la revendication 1, **caractérisé en ce que** la courbure des cellules de réception (28, 46), disposées face à face sur des côtés opposés du réservoir sous pression, est réalisée en sens opposé.

3. Réservoir sous pression selon la revendication 1 ou 2, **caractérisé en ce que** les cellules de réception (28, 46), disposées face à face sur des côtés opposés du réservoir sous pression, sont réalisées symétriquement les unes par rapport aux autres.

4. Réservoir sous pression selon l'une quelconque des revendications précédentes, **caractérisé en ce que** les cellules de réception (22, 28, 46) sont disposées et réalisées dans le réservoir sous pression, de telle sorte qu'une force agissant sur une paroi extérieure (30, 32, 48) des cellules peut être déviée à travers le réservoir sous pression vers le côté opposé du réservoir sous pression.

5. Réservoir sous pression selon l'une quelconque des revendications précédentes, **caractérisé en ce que** des parois (36b, 38) aboutées, orientées au moins vers l'espace de réception (14), possèdent une transition (40) sans arête.

6. Réservoir sous pression selon l'une quelconque des revendications précédentes, **caractérisé en ce que** les espaces de réception (14) s'étendent sensiblement parallèlement à une direction longitudinale (42).

7. Réservoir sous pression selon l'une quelconque des revendications précédentes, **caractérisé en ce qu'**une épaisseur (S) d'une paroi courbe (30, 32) se situe dans une plage entre P/60 et P/30, P étant la pression intérieure en bar, et l'épaisseur de paroi étant mesurée en mm.

8. Réservoir sous pression selon l'une quelconque des revendications précédentes, **caractérisé en ce qu'**une distance (B) entre des espaces de réception (14) adjacents est de l'ordre de 0,4 x S et 5 x S, S étant l'épaisseur d'une paroi courbe (30 ; 32).

9. Réservoir sous pression selon l'une quelconque des revendications précédentes, **caractérisé en ce qu'**une largeur intérieure (D), mesurée en mm, d'un espace de réception (14) entre des parois (62a, 62b) sensiblement parallèles se situe entre P/6 et P/4, P étant la pression intérieure en bar.

10. Réservoir sous pression selon l'une quelconque des revendications précédentes, **caractérisé en ce qu'**une paroi courbe (30 ; 32) est réalisée avec une section en forme d'arc de cercle.

11. Réservoir sous pression selon l'une que-l-conque des revendications précédentes, **caractérisé en ce qu'**une largeur (D) d'un espace de réception (14) entre des parois (62a, 62b) parallèles se situe entre 30 mm et 70 mm.

12. Réservoir sous pression selon l'une quelconque des revendications précédentes, **caractérisé en ce que** les cellules de réception (18, 22, 28) sont reliées entre elles d'un seul tenant.

13. Réservoir sous pression selon la revendication 12, **caractérisé en ce que** des parois courbes (32, 48), qui sont disposées face à face sur des côtés opposés du réservoir sous pression, sont reliées entre elles par une paroi (58) d'une seule pièce.

14. Réservoir sous pression selon la revendication 12 ou 13, **caractérisé en ce que**, en dehors des parois courbes, une paroi (38) pour un espace de réception (14) forme en même temps une paroi pour un espace de réception adjacent.

15. Réservoir sous pression selon l'une quelconque des revendications précédentes, **caractérisé en ce que** l'ensemble de cellules de réception (64) est réalisé par un procédé de moulage par injection et/ou un procédé de moulage par pression.

16. Réservoir sous pression selon l'une quelconque des revendications précédentes, **caractérisé en ce qu'**un espace de réception (92) est délimité par une enveloppe de réception (94) en matériau étanche aux fluides.

17. Réservoir sous pression selon l'une quelconque des revendications 1 à 12, **caractérisé en ce qu'**un espace de réception (92) est délimité par une enveloppe de réception (94), sachant qu'entre les enveloppes de réception (94) d'espaces de réception (92), écartés les uns des autres, est formé un espace intermédiaire (120), et des dispositifs de transmission des forces (112 ; 124 ; 126) sont agencés dans les espaces intermédiaires (120)

18. Réservoir sous pression selon la revendication 17, **caractérisé en ce qu'**une enveloppe de réception (94) est réalisée dans un matériau étanche aux fluides.

19. Réservoir sous pression selon la revendication 17 ou 18, **caractérisé en ce qu'**un espace intermédiaire (120) entre des enveloppes de réception (94) adjacentes a une forme sensiblement parallélépipédique.

20. Réservoir sous pression selon l'une quelconque des revendications 17 à 19, **caractérisé en ce que** les dispositifs de transmission de force comportent des entretoises intermédiaires (122) et/ou des parois intermédiaires (126), qui sont montées entre des enveloppes de réception (94) adjacentes.

21. Réservoir sous pression selon la revendication 20, **caractérisé en ce que** les entretoises intermédiaires et/ou les parois intermédiaires (122) sont formées intégralement lors de la réalisation des enveloppes de réception (94).

22. Réservoir sous pression selon la revendication 20 ou 21, **caractérisé en ce qu'**une entretoise intermédiaire et/ou une paroi intermédiaire (122) comporte entre des espaces de réception (92) adjacents un conduit de transition (124) pour le fluide.

23. Réservoir sous pression selon l'une quelconque des revendications 17 à 22, **caractérisé en ce qu'**une enveloppe de réception (94) est réalisée par un procédé de moulage par injection ou un procédé de moulage par pression.

24. Réservoir sous pression selon l'une quelconque des revendications 17 à 23, **caractérisé en ce que** les dispositifs de transmission des forces comportent des parois intermédiaires (126) qui sont montées dans les espaces intermédiaires (120) .

25. Réservoir sous pression selon la revendication 24, **caractérisé en ce qu'**une paroi intermédiaire (126) est réalisée par le remplissage d' une espace intermédiaire (120).

26. Réservoir sous pression selon la revendication 25, **caractérisé en ce qu'**une paroi intermédiaire (126) est réalisée par un procédé de moulage par pression ou un procédé de moulage par injection ou un procédé de soufflage.

27. Réservoir sous pression selon l'une quelconque des revendications 24 à 26, **caractérisé en ce qu'**une paroi intermédiaire (126) est réalisée dans le même matériau que les enveloppes de réception (94).

28. Réservoir sous pression selon l'une quelconque des revendications 24 à 27, **caractérisé en ce qu'**une paroi intermédiaire (126) est réalisée dans un matériau à fibres courtes.

29. Réservoir sous pression selon l'une quelconque des revendications 17 à 28, **caractérisé en ce que** les dispositifs de transmission des forces comportent des tirants d'ancrage (124), par lesquels des côtés opposés du réservoir sous pression sont reliés entre eux par force.

30. Réservoir sous pression selon la revendication 29, **caractérisé en ce qu'**une pluralité de tirants d'ancrage (124) écartés les uns des autres, sont disposés dans un espace intermédiaire (120).

31. Réservoir sous pression selon la revendication 29 ou 30, **caractérisé en ce que** les tirants d'ancrage (124) sont orientés dans des directions transversales (80, 82) par rapport à la direction longitudinale (42) des espaces de réception (92).

32. Réservoir sous pression selon l'une quelconque des revendications 29 à 31, **caractérisé en ce que** les tirants d'ancrage (124) sont orientés sensiblement dans la direction longitudinale (42) des espaces de réception (92).

33. Réservoir sous pression selon l'une quelconque des revendications 29 à 32, **caractérisé en ce qu'**un tirant d'ancrage (124) est muni de coupelles (128, 130) opposées.

34. Réservoir sous pression selon la revendication 33, **caractérisé en ce qu'**une coupelle (128 ; 130) est positionnée dans une zone (136) d'un espace intermédiaire (120), dans laquelle celle-ci s'élargit vers le côté extérieur.

35. Réservoir sous pression selon la revendication 34, **caractérisé en ce qu'**un tirant d'ancrage (124) comporte des coupelles (128, 130), qui sont reliées par un ou plusieurs fils métalliques (132) .

36. Réservoir sous pression selon la revendication 35, **caractérisé en ce qu'**un matériau renforcé par des fibres (134) est agencé autour du ou des fils métalliques (132).

37. Réservoir sous pression selon l'une quelconque des revendications 29 à 36, **caractérisé en ce que** les tirants d'ancrage (124) sont incorporés dans les espaces intermédiaires (120).

38. Réservoir sous pression selon l'une quelconque des revendications 29 à 37, **caractérisé en ce que** les tirants d'ancrage (124) sont disposés sans précontrainte dans les espaces intermédiaires (120).

39. Réservoir sous pression selon l'une quelconque des revendications 33 à 38, **caractérisé en ce que** les coupelles (128 ; 130) des tirants d'ancrage (124) sont positionnées dans les zones intermédiaires (136) entre des parois courbes d'enveloppes de réception adjacentes.

40. Réservoir sous pression selon l'une quel-conque des revendications précédentes, **caractérisé en ce qu'**un couvercle (68) pour délimiter un espace de réception (12 ; 92) dans la direction longitudinale (42) est formé intégralement sur des parois des cellules de réception.
